# EUROPEAN PATENT APPLICATION

(11) **EP 4 074 483 A1**
(43) Date of publication of application: **19.10.2022**
(21) Application number: 21168658.9
(22) Date of filing: 15.04.2021
(51) Int. Cl.: B29B 17/02, C08J 11/08

(54) **DISSOLUTION PROCESS AND APPARATUS FOR A SOLVENT BASED RECYCLING PROCESS OF POLYOLEFINS**

(71) Applicant: Borealis AG, 1020 Vienna (AT)
(72) Inventor: AL-HAJ ALI, Mohammad, 06850 Kulloo (FI); SLEIJSTER, Henry, 6161 Sittard-Geleen (NL); DEBOEL, Tom, 2070 Zwijndrecht (BE); SOBCZAK, Lukas, 4021 Linz (AT)
(74) Representative: Kador & Partner PartG mbB

(57) **Abstract**

A dissolution apparatus for dissolving from a waste polyolefin material a polyolefin in a solvent yielding a polyolefin solution slurry), the polyolefin solution slurry comprising a polyolefin solution and undissolved residues, for a continuous polyolefin recycling process, the dissolution apparatus comprising at least one feeding device selected from a list consisting of a dry feeding device, a wet feeding device, a melt feeding device, and a solution feeding device, at least one dissolution device, wherein the at least one dissolution device has at least one first inlet for introducing the waste polyolefin material fluidly connected to an outlet of the at least one feeding device, and wherein the at least one dissolution device has at least one second inlet for introducing the solvent, and wherein the at least one dissolution device has at least one outlet for withdrawing the polyolefin solution slurry, and wherein the dissolution device comprises a vessel comprising a stirrer.

## Description

The present invention generally relates to solvent based recycling processes of polyolefins. More particularly, the present invention discloses dissolution apparatuses and processes used for in solvent based recycling processes of polyolefins.

### Background

The challenge of the disposal of accumulated waste plastics and corresponding environmental issues have received widespread attention from the public and academician. Therefore, besides the concepts of the prevention of plastic waste in general and the prevention of leakage of plastic waste into the environment in particular, recycling of waste plastics material has become an important topic. Waste plastics can be turned into resources for new plastic products. Hence, environmental and economic aspects can be combined in recycling and reusing waste plastics material.

Mid of the 90-ies, several European countries have implemented a more differentiating waste collection system (Recycling Management System, Circular Economy Law), which actually allows a more target orientated collection and separation of plastic materials from other waste materials. Thus, a more or less efficient separation of polymer types from each other can be managed to achieve, after the treatment, finally polymer types enriched and thus more easily recyclable secondary plastic material fractions. The build-up of a suitable waste collection system and especially the set-up of a suitable waste separation infrastructure took place within the last decades to generate a secondary petrochemical raw material source resp. market. Parallel, several plastic recycling processes have been developed resp. in particular improved, primary with the target to increase the achievable product quality of the recyclable polymer materials.

There are different methods of plastic recycling commonly known including mechanical [material recycling], advanced physical or solvent based [solution] and chemical processing [(feedstock recycling, thermochemical such as pyrolysis or gasification, solvolysis]. Among these methods, mechanical recycling and chemical recycling are the most widely practiced.

Although, EU-public collection and pre-sorting systems reached plastic collection rates up to 76 [wt% (Ger)] in 2018, the direct plastic material recycling rates have been on a lower level for mechanical advanced recycling processes (e.g. 12 [%] for Germany in 2018). Today, advanced mechanical recycling includes separation steps such as shredding, vibrating, rotary sieving, advanced sorting methods supported by spectrometric-methods [e.g. NIR/VIS] and wash operations to reduce organic, biologic and partly odour contaminants primary from the surface of the recyclable plastic material, as well as achieving a polymer type enriched and more homogeneous polymer recyclate fraction. Thereby, plastic type-enriched resp. especially polyolefin-enriched secondary mass streams (> 85; < 95 [wt%] PO-content) can be obtained such as for example Polypropylene (PP), High-Density-Polyethylene (HDPE), Low-Density-Polyethylene (LDPE), Polyethylene-Terephthalate (PET) and/or Polystyrene (PS). Following, these separated mass streams will be processed to granules (extrusion) and material specific into products converted. Nevertheless, the achievable product quality remains relatively poor and does not allow both food contact and high performance applications and thus products such as flower pots, paint buckets or shampoo bottles are typically for the mechanically recycled materials today.

Especially improved and better performing sorting methods (e.g. colouring flake sorting) should effect both higher concentrations within the specific polymer type fraction and secondary wash operations to reduce more efficiently disturbing contaminants resp. to increase the product quality of the final secondary polymer raw material. Latter includes additionally expenditures concerning a complex process design, waste water treatment, exhaust gas treatment and intermediate product drying coupled with an increased total energy consumption, while keeping emissions as low as feasible.

However, the challenges of difficulties to remanufacture directly mechanical polymer recyclates into high-quality end applications remain, caused by waste components such as multi-layer materials resp. films or mixed flexible film waste materials. Further, important reason can be found in the less predictable and controllable homogeneity of the polymer type material mixture concerning especially historically applied polymerization technology (define material properties such as polymer density, average molecular weight, molecular weight distribution, molecular structure, cross-linking level) and historically applied compounding technology (additive-, filler concentrations and finally multiple pigment compositions). All these quality concerning factors remain inside the mechanically processed bulk mass mixture and cannot be covered by mechanical sorting and applied purification methods, which interact in best case onto the surface of the recyclable polymer material mixture.

A further approach to overcome the lower quality in advanced mechanical polymer recycling can be found in blending mechanical polymer recyclates with virgin polymers, finally to achieve a tolerable, marketable quality for the end application (non-food), whereby the implementable content of mechanically recycled polymer materials stays on a lower level (several [wt%]), especially for high-quality/high performance end applications.

The second arising plastic recycling route is chemical or feedstock recycling, concerning solvolysis and thermochemical processing. In 2018 the technology share rate of chemical plastic recycling was less than 2 [%] in total. A technology prognosis indicates, that the thermochemical recycling share rate should significantly increase from less than 2 [%] (2018) up to 13 [%] until 2030. However, chemical plastic recycling provides a promising opportunity to recover pre-sorted and pre-treated solid plastic waste anyhow to obtain feedstock for the petrochemical industry, which can be processed to plastics again, as well as to chemical commodities and fuels. To degrade the polymeric structure of the plastic solid mixture to shorter hydrocarbons up to monomeric building blocks, heat, and solvents have to be applied. Depending on the specific technology, chemical recycling approaches have much higher tolerances towards mixed plastic fractions and impurities and thus are principally capable to deal with contaminated and polymer material mixtures resp. secondary polymeric raw materials. Nevertheless, cross-contaminations of polyolefinic material mixtures with heteroatomic polymers (N/O/S, Halogene) should be preferably avoided.

Nevertheless, abstraction of especially thermochemical plastic processing, especially polyolefin recycling technologies illustrates rather the substitution of fossil based crude oil fractions to already fossil based secondary polymer recyclate materials by applying well-known traditional thermochemical unit operations, which have to be adapted costly to the secondary feedstock source. The specific energy demand remain, concerning the heat-intensive endothermic C-C resp. C-H bonding breakages (cracking, degradation), so that finally the total energy input is significantly higher in comparison to crude oil to virgin polymer processing - principally the degradation of a short chain molecule (e.g. Naphtha within crude oil fractionation) will be replaced by cracking long chain and branched polymers. Independently, the extravagant and energy-consuming thermal degradation remains. Furthermore, the CO₂-emissions of such processes are also higher as long as the necessary applied energy carrier could not easily switched to renewable/sustainable energy carriers.

The third plastic recycling route is advanced physical or Solvent based Recycling (SbR), which showed a plastic recycling market share of less than 1 % in 2018 in Germany. In SbR-processing the polymer will be initially dissolved in an appropriate solvent and following, either the solubility of the dissolved polymer will be decreased by the addition of a non-solvent (dissolution/precipitation) and/or a solidification of the polymer will be caused by the preferably complete separation of the solvent from the solidified polymer by thermal unit operations (evaporation, drying etc.).

Polyolefin-SbR-processing show similarities to traditional PO-polymerization processes, whereby the solvent for the monomers (olefins) and temporary formed oligomers (waxes) and short chain polymers is for example a refinery fraction (e.g. kerosene) until the solubility limits will be exceeded (long chain polyolefins are formed during polymerization) and the final polyolefin precipitates forming a polyolefin-solvent slurry (e.g. Chevron slurry process). An extraordinary polyolefin process is the solution PO-polymerisation process, whereby the olefin is initially dissolved in a paraffinic solvent blend, polymerized and the finalized polyolefin will stay in solution until the process conditions will significantly change by depressurization resp. flash devolatilization.

The framework of commonly known waste plastics material solvent based recycling processes includes the removal of impurities, dissolution, and reprecipitation/recrystallization and/or devolatilization of the polymer. Specifically, the one or more polymer is dissolved in one or more solvent, and subsequently, each polymer is selectively precipitated/crystallized. Ideally, if a solvent can dissolve either the target polymer or all the other polymers except the target polymer, it can be used for selective dissolution.

It is generally a desire to produce virgin-like polymers by waste plastics material solvent based recycling processes, whereas virgin-like is defined as contaminant-free, pigment-free, odor-free, homogeneous and generally similar in properties to freshly polymerized polymers. The need for high quality, virgin-like recycled resins is especially important for food and drug contact applications, such as food packaging. In addition to being contaminated with impurities and mixed colorants, many recycled resin products are often heterogeneous in chemical composition and may contain a significant amount of polymeric contamination, such as polyethylene contamination in recycled polypropylene and vice versa.

Key for an efficient solvent based polyolefin recycling process is the dissolution step. In this step, the polymer is solved in the solvent. A good homogeneity of the solution is advantageous to achieve a uniform composition of the stream leaving the dissolution section. This is needed to ensure a constant quality of the recycled polyolefin. Furthermore, the time needed to dissolve the polymer up to the homogeneity required is also desirably as low as possible. In particular, this is required to have an economical process both in terms of CAPEX and OPEX.

Among different design criteria that have to be considered for the design of a mixing device for the dissolution of the waste polyolefin in a solvent based polyolefin recycling process, the mixing inside of a mixing vessel is very challenging. First of all, the viscosity of the components inside the mixing vessel is relatively high. Typically, the viscosity depends on the polyolefin recycling process, the polyolefin recycled (average molecular weight) and the corresponding conditions used in the vessel for dissolution (pressure and temperature). Exemplary viscosities of can be around 0.1 Pa·s.

Typically, it is needed to produce a fully solubilized polyolefin solution in particular in view of the subsequent separating steps. To achieve this, design of the mixing vessel is typically aiming at maximum homogeneity of components.

Furthermore, control of heat is needed to ensure an optimal and fast dissolution. Respective mixing patterns in the mixing vessel leading to improved homogeneity usually also lead to better heat convection and, thus, control.

Therefore, mixing devices optimized in view of homogeneity of components in the mixing vessel, improved heat control, improved phase control, shortened dissolution times, and specific control of the mixing patterns are generally needed in the field of solvent based polyolefin recycling.

CA 2376488 A1 discloses a solvent-based process to separate different polyolefins (polypropylene (PP), high density polyethylene (HDPE), low density polyethylene (LDPE) and linear low density polyethylene (LLDPE)) using two solvent, i.e. n-hexane and petroleum spirit. The starting material is contacted with the solvent at elevated temperatures, i.e. around 140 °C. Subsequently, undissolved solids are removed from the solution in one or more steps using filtration, centrifugation or other mechanical separation methods. After the removal of undissolved solids the solution consists mainly of the solvent and the dissolved polyolefins. Each polyolefin is precipitated one after the other from the solution using crystallization under simultaneous shearing action. Thereby, each polymer type is separated and waxes, polymer chain fragments and different additives are kept in solution. For the dissolution step, a mixing nozzle is disclosed. No other means are explicitly disclosed about the mixing. Hence, from the disclosure of CA 2376488 A1 no further improvement of the mixing time and homogeneity can be derived.

### Object of the invention

It is therefore an object of the present invention to provide a dissolution device and a dissolution process for a solvent based recycling process of polyolefins allowing for faster dissolution times and improved homogeneity of the polyolefin solution.

### Summary of the invention

It has been surprisingly found that said object is achieved by a dissolution apparatus for dissolving from a waste polyolefin material a polyolefin in a solvent yielding a polyolefin solution slurry, the polyolefin solution slurry comprising a polyolefin solution and undissolved residues, for a continuous polyolefin recycling process, the dissolution apparatus comprising at least one feeding device selected from a list consisting of a dry feeding device, a wet feeding device, a melt feeding device, and a solution feeding device, at least one dissolution device, wherein the at least one dissolution device has at least one first inlet for introducing the waste polyolefin material fluidly connected to an outlet of the at least one feeding device, and wherein the at least one dissolution device has at least one second inlet for introducing the solvent, and wherein the at least one dissolution device has at least one outlet for withdrawing the polyolefin solution slurry, and wherein the dissolution device comprises a vessel comprising a stirrer.

It has been further surprisingly found that said object is achieved by a dissolution process for dissolving from a waste polyolefin material a polyolefin in a solvent yielding a polyolefin solution slurry, the polyolefin solution slurry comprising a polyolefin solution and undissolved residues, for a continuous polyolefin recycling process, the dissolution process comprising the steps of feeding the waste polyolefin material, dissolving the polyolefin from the waste polyolefin material in a solvent using a dissolution apparatus according to the present invention.

### Definitions

The expression *'volatiles'* or *'volatile compounds'* as used herein has to be understood as compounds having significantly lower molecular weight in comparison to the polyolefin separated in the process of the invention. Such compounds typically are present in the gaseous form when being exposed to a flash separator. Commonly, the volatile compounds are a mixture of volatile hydrocarbons. Preferably, the mixture of volatile hydrocarbons comprises at least one solvent.

### Description of the drawings

Figure 1 shows an embodiment of the present invention being carried out in a batchwise manner including a dry feeding device.
Figure 2 shows an embodiment of the present invention being carried out in a batchwise manner including a wet feeding device.
Figure 3 shows an embodiment of the present invention being carried out in a continuous manner including a melt feeding device.
Figure 4 shows an embodiment of the present invention being carried out in a continuous manner including a solution feeding device.
Figure 5 shows an embodiment of the present invention being carried out in a continuous manner including a dry feeding device.
Figure 6 shows an embodiment of the present invention being carried out in a continuous manner including a wet feeding device.
Figure 7 shows a preferred embodiment of the invention.

### Reference signs

- 1: waste polyolefin material
- 2: target polyolefin
- 3: solvent
- 4: polyolefin solution slurry
- 5: feeding device
- 6: dissolution device
- 7: homogenizing device
- 8: wetting device
- 9: pump
- 10: extruder
- 11: static mixer

### Detailed description of the invention

### Dissolution process

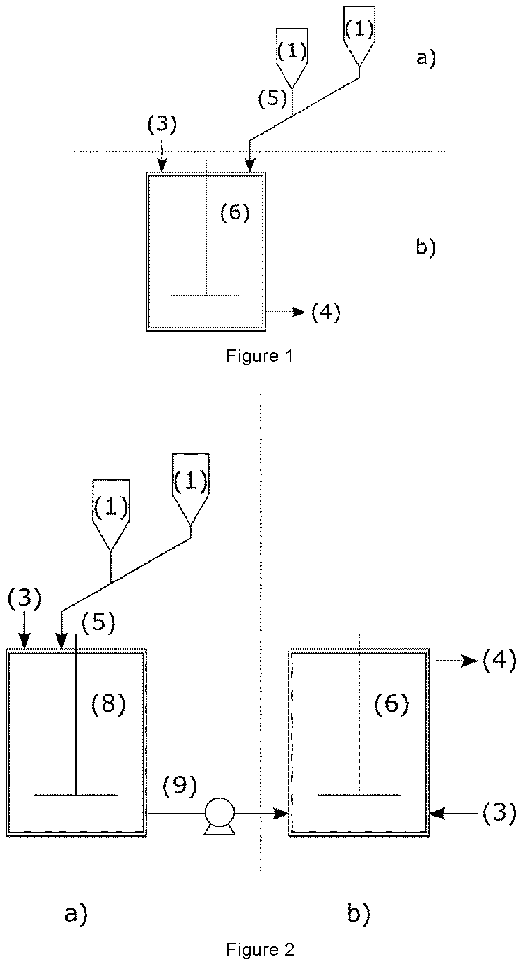

The process of the present invention will be described on the basis of Figures 1-6. It should be noted that the basic concept of the process of the present invention is the dissolution of at least one waste polyolefin in a solvent.

The dissolution process of the present invention generally comprises two steps: a) the feeding step of feeding the waste polyolefin material (1) to step b), the dissolution, in which the polyolefin (2) is at the latest brought into contact with the solvent (3) and thereby solved from the waste polyolefin material (1) resulting in a polyolefin solution slurry (4) comprising the polyolefin (2) in solution with the solvent (3) and undissolved residues. Optionally, the dissolution process can comprise a homogenizing step c).

### Waste polyolefin material

The waste polyolefin material is typically provided in a ground form, being subject already to several preceding steps for presorting and washing, even extracting. Such steps are generally steps of preparing the waste polyolefin material (1) from general waste, including washing the waste with aqueous and/or caustic solutions to remove unwanted material from the polyolefin comprising waste. Furthermore, the size of the pieces of polymer comprising waste is preferably reduced beforehand, preferably by cutting, milling, and shearing, or mixtures thereof. Hence, therefore, the waste polyolefin material (1) is provided in ground form, preferably in the form of flakes, preferably having a largest diameter of not higher than 4 cm, more preferably not higher than 3 cm, and typically not lower than 0.5 cm. The waste polyolefin material (1) is essentially free of any waste on the surface of the polyolefin flakes. Thus, the process of the present invention is directed to the dissolution of waste polyolefin flakes being essentially.

### Polyolefin

The waste polyolefin material (1), can contain different plastics such as polyethylene (PE) or polypropylene (PP), in particular high density polyethylene (HDPE), low-density polyethylene (LDPE) or linear low-density polyethylene (LLDPE), poly(ethylene terephthalate) (PET), polypropylene (PP), poly(vinyl chloride) (PVC), polystyrene (PS), polycarbonate (PC), polyurethanes (PUR) and polyamides (PA). Preferably, the waste polyolefin material (1) has a polyolefin content of higher than 75 wt%, more preferably of higher than 80 wt% and most preferably higher than 85 wt% of the total weight of the waste polyolefin material (1). The waste polyolefin material (1) further can comprise waste impurities, such as common additives, such as antioxidants, food residues, residual perfume components, dyes and pigments, and generally components inevitably introduced in plastic waste material by production and usage. In addition to contaminations, many recycled resin products are often heterogeneous in chemical composition and may contain a significant amount of polymeric contamination, such as PE contamination in recycled PP and vice versa.

The polyolefin (2) recycled by the process of the present invention can be a mixture of polyolefin classes such as polypropylene or polyethylene. Preferably, however, the polyolefin (2) comprises, preferably consists of a single polyolefin class. Most preferably, the polyolefin (2) comprises, preferably consists of polypropylene. It should be understood that in the latter case polyethylene residues can be again dissolved at increased temperatures and residence times with the same dissolving solvent (3) and separated according to the present invention.

### Solvent

Generally, the solvent (3) must be able to solve polyolefins, in particular the polyolefin (2). Therefore, preferably, the solvent (3) is a non-polar solvent or a mixture thereof. Therefore, the solvent preferably is a hydrocarbon or a mixture of hydrocarbons. More preferably, the solvent (3) is a paraffinic solvent or a mixture of paraffinic solvents due to paraffinic nature of polyolefins ('*Similia similibus solventum').* Aromatic hydrocarbon solvents are known for good solvent properties and can therefore also be considered. Nevertheless, a drawback of aromatic hydrocarbons lies in enhanced dissolution of polystyrene. On the other hand, e.g. n-alkanes are known as not dissolving polystyrene. Most importantly, the solvent should not dissolve polar polymers such as PET, PVC, PA, PC, PUR, or bio-based fractions such as cellulose or lignin. Furthermore, preferably, the boiling point at 1 bar pressure of the solvent (3) is higher than 70 °C. Therefore, preferably, the solvent is selected from the list of low boiling solvents and high boiling solvents or mixtures thereof. Low boiling solvents comprise n-alkanes and aromatic hydrocarbons, such as toluene and xylene. The advantage of low boiling solvents is that they can be separated from dissolved polyolefins via evaporation. High-boiling solvents comprise paraffinic gas oil or vacuum gas oil. Such solvents have the disadvantage that they are difficult to be removed from the product. Aromatic solvents on the other hand may cause odor problems due to the residual content after separation or may cause problems when targeting applications where food approval is required. Therefore, preferably, the solvent (3) is selected from n-alkanes or mixtures thereof having a boiling point at 1 bar pressure of more than 70 °C and preferably not more than 150 °C, more preferably not more than 140 °C, even more preferably not more than 100 °C and most preferably not more than 90 °C. Most preferably, the solvent (3) is selected from the group consisting of n-heptane, n-octane, n-nonane, and n-decane or mixtures thereof.

### Undissolved residues

The undissolved residues generally can be undissolved solid or liquid residues. Most commonly, the undissolved liquid residues are other polymers not soluble at the conditions and in the solvent chosen in the process. Undissolved solids can either be non-polymeric solids, such as pigments or additives not soluble in the dissolving solvent (3) or polymers. Such polymers can be either polar polymers, which are not solvable in the used solvent, or non-polar polymers, which are not solvable under the conditions used in the dissolution step.

### Feeding step a)

The waste polyolefin material (1) is fed to the dissolution step b) in a feeding step a). The feeding step a) can result either in a batch or a continuous operation of the process. Reason is the pressurized dissolution in step b) (cf. below), which does not allow any feeding step to feed polyolefin during dissolution operation. I.e. dry feeding or wet feeding cause a batchwise operation. In the other hand, melt feeding and solution feeding can be used in a continuously performed process. Hence, these four feedings steps shall be described in detail below.

### a) Dry feeding (Figure 1)

The step of dry feeding includes direct feeding of the polyolefin flakes in solid form to the solvent in the dissolution step b). Typically, the solid polyolefin flakes will be purged subsequently to the feeding step a) to vent out oxygen components or other gaseous substances included in the solid material. The higher the operating pressure in the dissolution step b), the more venting is needed. A typical set-up used for solid dry feeding are *"Lockhoppers",* which can also be used for pressurized vessels. A disadvantage can be that the vessel used for dissolving needs a level indication, to prevent the solvent from entering the lockhopper configuration upon dosing the polyolefin flakes. Furthermore, gas can be brought into dissolution step b) with the solid polyolefin flakes, requiring later removal.

Hot solvent should be fed separately to the dissolution step b) having a higher temperature than the final dissolution temperature to heat up the feed of solid polyolefin flakes. Dry feeding results in longer dissolution times. Efficient mixing is needed to ensure the even distribution of material and heat inside the homogenizer and, respectively, a constant quality of the outlet. Moreover, efficient mixing reduces the required residence time to solubilize the polyolefin in the solvent, having a positive effect on the plant OPEX (operational expenditure) and CAPEX (capital expenditure). In case of the preferred case of pressurized dissolution step b), dry feeding needs to be performed batchwise.

### b) Wet feeding (Figure 2)

Feeding the solid polyolefin flakes via a wet feed means that they are mixed with a part of the solvent beforehand. Preferably, the solvent is the same as used for dissolution. Density differences between the solid polyolefin and the solvent can result in the need for an extra mixing step at atmospheric conditions preceding step b). Moreover, the flake size of the polyolefin feed needs to be within a narrow range in this case to allow later pumping of the slurry. Oxygen components should be purged out before the solid polyolefin flakes are added to the solvent. The slurry feed can be executed for instance via the use of specific slurry pumps. The dissolution step b) can be carried out without any gaseous phase involved. However, the same problems arise as in case of the dry feeding step, where proper mixing is needed to solubilize the polyolefin (2) finally, thereby increasing the need of energy. Hot solvent is fed separately to the dissolution step b) at a higher temperature than the final dissolution temperature to heat up the slurry feed. In case of the preferred case of pressurized dissolution step b), wet feeding needs to be performed batchwise.

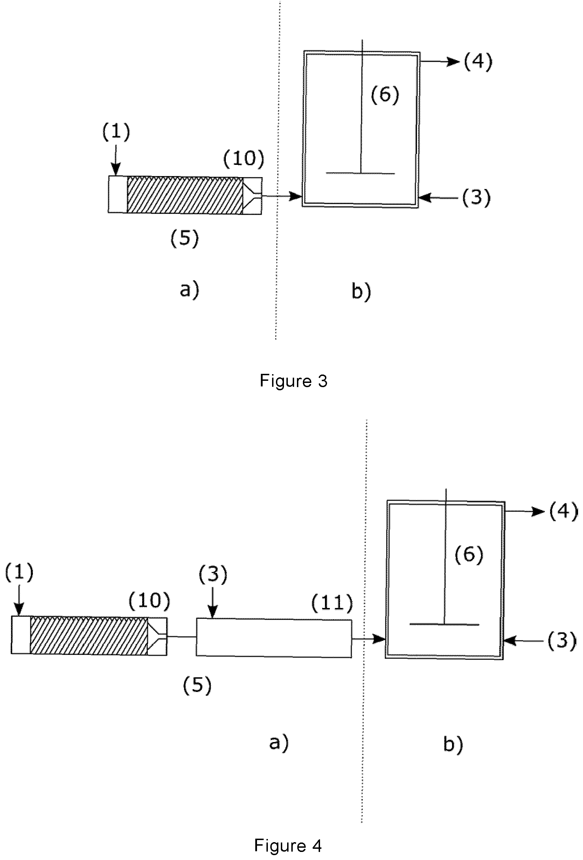

### c) Melt feeding (Figure 3)

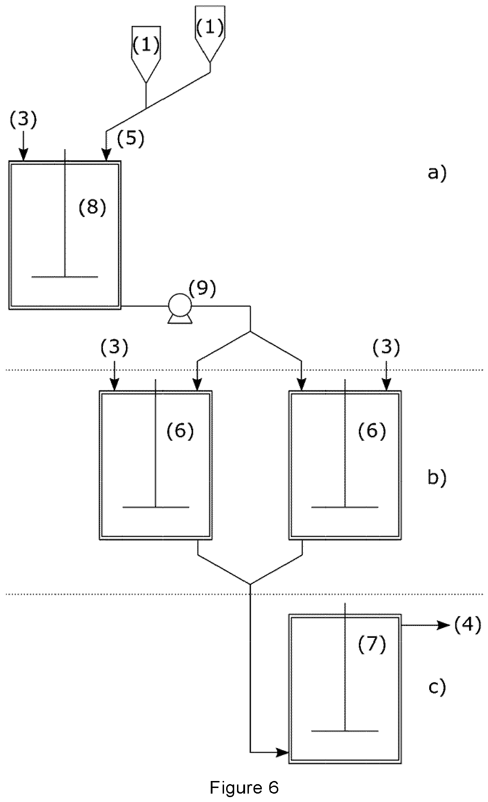

In a melt feeding step, the solid polyolefin flakes are molten before being fed to the dissolution step b). The temperature of the molten polyolefin feed is preferably at the dissolution temperature in step b) or higher. More preferably, the temperature of the molten polyolefin feed is higher than the temperature in step b). Reason is that the melting preferably is carried out in an extruder, in which temperatures of up to 200 °C or higher are applied. The molten polyolefin feed can be introduced to step b) without involving a gaseous phase, i.e. into a dissolution vessel completely filled with solvent and molten polyolefin. The advantage of such a setup is that the molten polyolefin mixes faster with the solvent and also dissolves faster in the solvent in comparison to the dry or wet feeding. As the difference in viscosity can still be high between the melt and the solvent, the mixing still is demanding. Efficient mixing is therefore still needed since bad mixing might cause uneven temperature distribution in the solution that could affect the polymeric material specially when the temperature of the polyolefin reaches relatively high values, i.e. 250 °C for polypropylene. Hot solvent is fed separately to the dissolution step b) at a higher temperature than the final dissolution temperature to heat up the slurry feed. Melt feeding can be performed in a continuous manner, as the melt feed can be pressurized to match the pressure in the dissolution step. The embodiment as shown in Figure 3 is the most preferred embodiment of the invention for melt feeding. If the required homogeneity of the polyolefin solution slurry (4) in the outlet of the dissolution device (6) is not achieved, two options can be used to increase the homogeneity. The first option includes changing the dimensions of the dissolution device, preferably the dimensions of the vessel and/or the stirrer and optionally increasing the residence time. The second option includes using two more batch dissolution devices located upstream of the inlet of the final dissolution device in a embodiment comparable to the embodiment as shown in Figure 6 as part of the wet feeding system.

### d) Solution feeding (Figure 4)

Solution feeding is performed in accordance with melt feeding. However, the molten polyolefin feed, i.e. from an extruder, is further mixed with at least a part of the solvent, wherein the solvent is already heated. The polyolefin concentration after mixing is preferably the final concentration needed in the dissolution step b). In such case, in the dissolution step b) only the homogeneity of the solution is improved. Preferably, a separate feed of hot solvent to the dissolution step b) is not needed. The advantage of solution feeding is that the viscosity differences between the dissolved polyolefin feed and the polyolefin solution in the dissolution step b) are even lower than for melt feeding, thereby further reducing the energy need for step b). Solution feeding can be performed in a continuous manner, as the solution feed can be pressurized to match the pressure in the dissolution step.

### Dissolution step b)

The step b) is a dissolution step, thereby contacting the waste polyolefin material (1) with at least one solvent (3). Hence, the polyolefin (2) is dissolved in the dissolving solvent (3) in step b). On the other hand, the resulting polyolefin solution slurry (4) still can comprise undissolved residues besides the polyolefin solution. It should be noted that the separation of said undissolved residues will take place downstream of the step b) of the present invention.

The step b) can be carried out in that only a single target polyolefin is dissolved by the dissolving solvent (3). Such a configuration is in particular applicable, if the target polyolefin dissolves at lower temperatures than all other polyolefins present in the waste polyolefin material (1). In another embodiment of step b), the conditions are chosen so that even two or more polyolefins are dissolved, i.e. polyolefin A and polyolefin B. In such a case, subsequent liquid-liquid separation steps are beneficial to separate the solubilized polyolefins from each other (cf. below). Mainly polypropylene can be dissolved from a polyethylene/polypropylene mixture using non-polar solvents with Hansen solubility parameters, which are similar/nearby to those of the polypropylene. Preferably, the conditions are chosen to exhibit temperatures between 100 and 350 °C, more preferably between 100 and 300 °C, even more preferably between 110 to 290 °C, and most preferably between 120 to 280 °C. Preferably, the pressure used in step b) is in the range of 5 to 100 bar, more preferably from 5 to 50 bar, even more preferably from 7 to 45 bar, and most preferably from 10 to 40 bar.

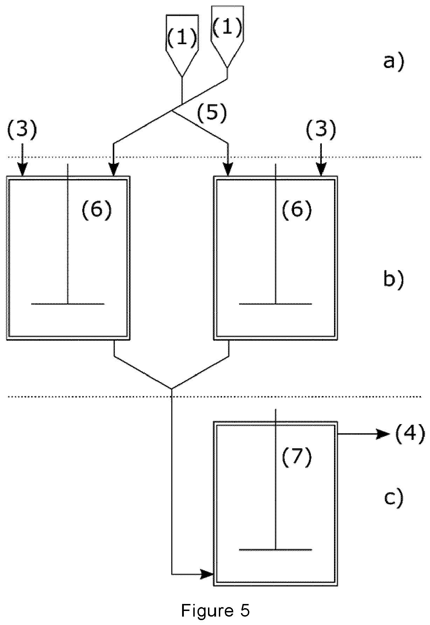

The dissolution process of the present invention can be carried out in a batchwise or a continuous manner. Preferably, the dissolution process of the present invention is carried out in a continuous manner. In such case, the feeding step a) needs to support continuous operation at pressurized dissolution. This is in particular true for melt and solution feeding. However, also continuous operation is feasible for dry and wet feeding, as shown in Figures 5 and 6 and as explained in the following.

Figure 5 shows a process including dry feeding to two batch dissolution steps b) instead of only one dissolution step. In each dissolution step, hot solvent (3) is introduced and the solid polyolefin flakes are dissolved in the solvent. However, the resulting polyolefin solution slurry (4) is provided into a homogenizing step c), in which both slurries are mixed and homogenized. From this homogenizing step c), the resulting polyolefin solution slurry (4) can be continuously removed and fed to the downstream process. The operation times of the two dissolution steps are not identical, but overlapping. Hence, in case the first dissolution step needs to be batchwise fed with solid polyolefin flake, from the other dissolution step still slurry can be fed to the homogenizing step c). Thus, the homogenizing step c) functions as a reservoir besides homogenizing the received streams. It should be noted that more than two dissolution steps b) can be used in parallel reducing the risk of the homogenizing step c) running dry and disruption of the continuous process. However, too many dissolution steps b) in parallel raise only the costs without further contributing to reliability. Therefore, the preferred range of parallel dissolution steps b) is 2 to 4, most preferably, there are two dissolution steps b) in parallel. Generally, the feeding to the parallel dissolution steps b) occurs at low pressures, preferably atmospheric pressures, where the pressure is enhanced after the feeding has been finished to dissolve the solid polyolefin flakes. Ideally and preferably, the transport between the parallel dissolution steps b) and the homogenizing step c) is done using gravitational forces. It should also be noted that the homogenizing step c) can use equipment having lower dimensions than the equipment used in the parallel dissolution steps b). In a most preferred embodiment, the homogenizing step c) can be even completely omitted. The requirement for such an embodiment, however, is that the homogeneities and polyolefin concentrations of the polyolefin solution slurries produced by the parallel dissolution steps b) are nearly identical.

Figure 6 shows a process including wet feeding to a two parallel dissolution steps b) instead of only one dissolution step b). The additional setup is identical to the additional setup used in the embodiment of Figure 5. Hence, the parallel dissolution steps b) feed a homogenizing step c), thereby creating a continuous flow of polyolefin solution slurry (4). Preferably, the temperature of the solvent (3) fed to the wetting step of the wet feeding step is lower than the temperature of the solvent (3) fed to the parallel dissolution steps b).

Therefore, in the dissolution process, the feeding step a) comprise at least one step selected from the list of dry feeding, wet feeding, melt feeding, and solution feeding.

Preferably, in case the dissolution process of the present invention is performed in a continuous manner, the feeding step a) comprise at least one step selected from the list of dry feeding, wet feeding, melt feeding, and solution feeding.

As dry feeding and wet feeding for continuous modes are relatively complex and difficult to control, in case the dissolution process of the present invention is performed in a continuous manner, more preferably, the feeding step a) comprises at least one feeding step selected from the list of melt feeding and solution feeding.

Most preferably, the feeding step a) comprises only solution feeding steps. As explained above, the solution feeding is able to provide the lowest difference in viscosities in the dissolution step b), thereby reducing the time needed for complete homogenizing and solubilizing the most.

Most preferably, the dissolution process of the present invention is carried out using the dissolution apparatus of the invention as described below.

### Dissolution apparatus according to the present invention

The dissolution apparatus according to the present invention for dissolving at least one polyolefin (2) from a waste polyolefin material (1) in a solvent (3) comprises at least one feeding device (5) and at least one dissolution device (6). Optionally, the dissolution apparatus according to the present invention further comprises a homogenizing device (7).

### Feeding device

The possible feeding devices are in parallel to the feeding steps already explained above. Therefore, they are explained accordingly.

### Dry feeding device (Figure 1)

Preferably, a dry feeding device comprises one or more lockhoppers, which feed a line connected to the dissolution device. To be able to load the line, the line should not be pressurized. Hence, a dry feeding device is not able to feed to a pressurized dissolution device, thereby causing batchwise operation.

### Wet feeding device (Figure 2)

Preferably, a wet feeding device comprises one or more lockhoppers, which feed a line connected to a wetting device (8). The wetting device (8) preferably is a vessel, more preferably a vessel with a stirrer. The wetting device can be implemented as described for the dissolution device below. The outlet of the wetting device preferably is connected to a pump (9), which is able to pressurize the slurry from the wetting device before entering the dissolution device. For the same reasons as for the dry feeding device, the wet feeding device is not able to feed to a pressurized dissolution device, thereby causing batchwise operation.

### Melt feeding device (Figure 3)

The melt feeding device preferably comprises an extruder (10), which is fluidly connected to the dissolution device. Such a setup is able to be operated continuously. In a more preferred case, the melt feeding device comprises a melt filter for filtering solids from the polyolefin melt.

### Solution feeding device (Figure 4)

The solution feeding device comprises the same equipment as the melt feeding device. However, additionally, the melt stream is fed to a mixer (11), to which also solvent (3) can be fed. Preferably, the mixer (11) is a static mixer or a dynamic mixer. Most preferably, the mixer is a static mixer. Likewise to the melt feeding device, such a setup is able to be operated continuously. In a more preferred case, the solution feeding device also comprises a melt filter for filtering solids from the polyolefin melt.

### Dissolution device

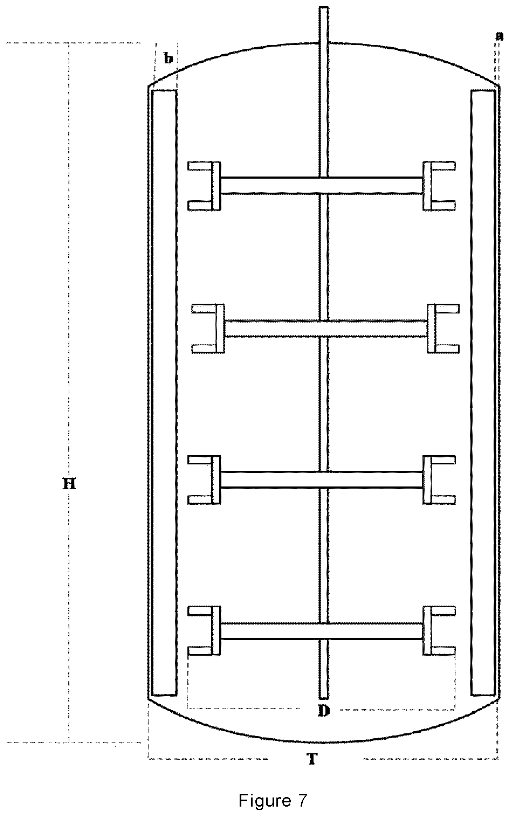

Preferably, the dissolution device (6) comprises a vessel comprising at least one first inlet for introducing the solvent (3), at least one second inlet for introducing the waste polyolefin material (1), at least one outlet for withdrawing the polyolefin solution slurry (4), and a mixer (cf. Figure 7).

The mixer and the vessel shall be configured to achieve the most effective mixing pattern. The most effective mixing pattern results in fast and thorough solubilizing and homogenizing of the polyolefin (2) in the solvent (3). Preferably, the mixing pattern comprises an upward stream along the axis of the stirrer up to the top part of the vessel and a respective downstream on the walls of the vessel. Likewise, also an inverse mixing pattern is conceivable, in which a downward stream follows the axis of the stirrer and a respective upward stream on the walls of the vessel.

Such a behavior is supported by the existence of baffles in the vessel. Preferably, there are two to twelve baffles comprised in the vessel. More preferably, there are four to eleven baffles comprised in the vessel, even more preferably six to nine baffles. Most preferably, the vessel comprises eight baffles. Preferably, the baffles are mounted on the top and bottom part of the vessel, leaving a distance to the wall of the vessel and pointing inwards, preferably to the axis of the stirrer.

The breadth of the baffles b is preferably in the range of 1/4 to 1/24 of the diameter of the vessel *T,* more preferably 1/6 to 1/18 of *T,* and most preferably 1/12 of T. Furthermore, the distance between the baffles and the wall of the vessel a is preferably in the range of from 1/80 to 1/40 of the diameter of the vessel T, more preferably from 1/70 to 1/50 of T and most preferably of 1/60 of T.

The shape of the vessel is preferably cylindrical. More preferably, the top and/or the bottom parts of the vessel are shaped in a korbbogen shape, whereas a korbbogen shape is a torispherical head also named semi-ellipsoidal head defined according to DIN 28013. The inside radius of the dish is 80% of the outside diameter of the cylinder of the vessel (*r₁ = 0.8 x T).* The radius of the knuckle is (*r₂* = *0.154 x T).*

Preferably, the height/diameter ratio of the vessel (*H*/*T*) is in the range from 1 to 3, preferably 1.5 to 2.5, most preferably, the ratio *H*/*T* is 2.

In case the feeding of the vessel is performed by melt or solution feeding, preferably the feeding point is in the bottom part of the vessel and the discharge point of the vessel is at the top.

The stirrer comprises an axis, which is in parallel to the symmetry axis of the vessel. Furthermore, the stirrer comprises at least one impeller, extending in an angle of more than 10° from the axis towards the walls of the vessel. Preferably, the impeller extends in two directions opposite from each other.

In such case, the diameter of the impeller is preferably in the range of from 0.5 to 0.9 of the diameter of the vessel T, more preferably in the range of from 0.6 to 0.8 of *T.* Most preferably, the diameter of the impeller is 0.7 x *T.*

The stirrer of the dissolution device of the dissolution apparatus of the present invention preferably comprises 1 to 8 impellers, more preferably 3 to 6 impellers. Most preferably, the stirrer comprises 4 impellers.

The impellers are preferably MIG type or Intermig or Paravisc type impellers. Most preferably, the impellers are Intermig type impellers.

The mixer of the present invention has a very high axial mixing and low radial mixing and is can be operated in the viscosity range of 0,03 - 10 Pa s.

Furthermore, the mixer of the present invention causes a circulation in the vessel in the middle up- or downwards and then via the walls of the vessel to the opposite direction (down- or upward), creating a minimum of radial mixing and a maximum of axial mixing.

Preferably, the dissolution device of the present invention has a circulation time of the polyolefin solution lower than one minute, preferably lower than 20 s.

Preferably, the stirrer is rotated in the range of 20 to 200 rpm, more preferably 80 to 120 rpm, and most preferably at 100 rpm. If the rotation speed is too high, too much energy is consumed. If the rotation speed is too low, the time for reaching homogeneity is too high. Moreover, this affects the homogeneity of mixer contents as mixing efficiency degrades with the decrease in Reynolds number.

### Homogenizing device

The homogenizing device (7) can be identical to the dissolution device as described above. However, the dimensions of the homogenizing device can be smaller than those of the dissolution devices. In case the mixing in the dissolution devices is already very homogenous, the homogenizing device can also be a mere vessel having a reservoir function, or even just a line branching for combining the slurry streams from the dissolution devices.

Generally, any of the feeding devices can be combined with a dissolution device as described above. Nevertheless, dry and wet feeding devices will result in the need of a batchwise operation.

However, as set out above already, dissolutions devices as shown in Figures 5 and 6 can overcome this drawback and run also dry and wet feeding devices in continuous mode.

The embodiment of Figure 5 combines a dry feeding device (5) with two dissolution devices (6), whereas the outlet of the dry feeding device (5) is fluidly connected to the at least one inlet for introducing waste polyolefin material (1) of the at least two dissolution devices (6). Furthermore, optionally, the at least one outlets for withdrawing the polyolefin solution slurry (4) are fluidly connected to the inlet of a homogenizing device (6).

Likewise, the embodiment of Figure 6 combines a wet feeding device (5) with two dissolution devices (6), whereas the outlet of the wetting device of the wet feeding device (5) is fluidly connected to the at least one inlet for introducing waste polyolefin material (1) of the at least two dissolution devices (6). Furthermore, optionally, the at least one outlets for withdrawing the polyolefin solution slurry (4) are fluidly connected to the inlet of a homogenizing device (6).

While preferred embodiments of the invention are embodiments suitable for continuous mode, including the embodiments shown in and described for Figures 3-6, due to the increased complexity of the continuously operatable embodiments including dry and wet feeding devices, more preferred are dissolution apparatuses comprising melt or solution feeding devices.

Most preferred is a dissolution apparatus comprising only solution feeding devices.

Generally, preferably, the wetting device (8), the dissolution device (6) and the homogenizing device (8) independently from each other are operated in that they are completely filled with liquid and optionally solids, thereby disallowing a gaseous phase to be present in the device.

A most preferred dissolution apparatus according to the present invention comprises one or more solution feeding devices (5) being fluidly connected to the at least one inlet of a dissolution device (6), whereas the dissolution device (6) is a vessel with a stirrer, whereas the vessel has a cylindrical shape with korbbogen shaped top and bottom parts, whereas the ratio of the height to the diameter of the vessel is in the range of from 1 to 3 the feeding point is in the bottom part of the vessel and the discharge point of the vessel is at the top, wherein the stirrer comprises an axis, which is in parallel to the symmetry axis of the vessel, and 4 Intermig impellers, wherein the diameter of the impellers is in the range of from 0.5 to 0.9 x the diameter of the vessel T.

## Claims

1. A dissolution apparatus for dissolving from a waste polyolefin material (1) a polyolefin (2) in a solvent (3) yielding a polyolefin solution slurry (4) the polyolefin solution slurry (4) comprising a polyolefin solution and undissolved residues, for a continuous polyolefin recycling process, the dissolution apparatus comprising:
- at least one feeding device (5) selected from a list consisting of a dry feeding device, a wet feeding device, a melt feeding device, and a solution feeding device,
- at least one dissolution device (6),
wherein the at least one dissolution device (6) has at least one first inlet for introducing the waste polyolefin material (1) fluidly connected to an outlet of the at least one feeding device (5), and
wherein the at least one dissolution device (6) has at least one second inlet for introducing the solvent (3), and
wherein the at least on dissolution device (6) has at least one outlet for withdrawing the polyolefin solution slurry (4), and
wherein the dissolution device (6) comprises a vessel comprising a stirrer.

2. The dissolution apparatus according to claim 1, wherein the at least one feeding device (5) is selected from a list consisting of a melt feeding device and a solution feeding device.

3. The dissolution apparatus according to any of claims 1 or 2, wherein the at least one feeding device (5) is a solution feeding device.

4. The dissolution apparatus according to any of the preceding claims, wherein dissolution device (6) is suitable for creating a mixing pattern in the vessel, wherein the mixing pattern comprises an upward stream along an axis of the stirrer to a top part of the vessel and a respective downward stream along walls of the vessel or the mixing pattern comprises a downward stream along an axis of the stirrer to a bottom part of the vessel and a respective upward stream along walls of the vessel.

5. The dissolution apparatus according to any of the preceding claims, wherein the vessel of the dissolution device (6) comprises 2 to 12 baffles.

6. The dissolution apparatus according to claim 5, wherein the baffles are mounted on the top and bottom part of the vessel, leaving a distance to the wall of the vessel and pointing to the axis of the stirrer, wherein the breadth of the baffles b is preferably in the range of 1/4 to 1/24 of the diameter of the vessel *T* and the distance between the baffles and the wall of the vessel *a* is in the range of from 1/80 to 1/40.

7. The dissolution apparatus according to any of the preceding claims, wherein the shape of the vessel is preferably cylindrical and the top and the bottom part of the vessel are shaped in a korbbogen shape.

8. The dissolution apparatus according to any of the preceding claims, wherein height/diameter ratio of the vessel (*H*/*T*) is in the range from 1 to 3.

9. The dissolution apparatus according to any of the preceding claims 2 to 8, wherein a feeding point is in the bottom part of the vessel and a discharge point is in the top part of the vessel.

10. The dissolution apparatus according to any of the preceding claims, wherein the stirrer comprises at least one impeller having a diameter in the range of from 0.5 to 0.9 x the diameter of the vessel T.

11. A dissolution process for dissolving from a waste polyolefin material (1) a polyolefin (2) in a solvent (3) yielding a polyolefin solution slurry (4), the polyolefin solution slurry comprising a polyolefin solution and undissolved residues, for a continuous polyolefin recycling process, the dissolution process comprising the steps of:
a) feeding the waste polyolefin material (1),
b) dissolving the polyolefin (2) from the waste polyolefin material (1) in a solvent (3) using a dissolution apparatus according to any of the preceding claims 1 to 10.

12. The dissolution process according to claim 11, wherein the process is a continuous process.

13. The dissolution process according to any of claims 11 or 12, wherein step a) is selected from a list consisting of dry feeding, wet feeding, melt feeding, solution feeding and mixtures thereof.

14. The dissolution process according to any of claims 11 to 13, wherein step a) is a solution feeding step.

15. The dissolution process according to any of claims 11 to 14, where step b) is carried out at a temperature between 110 to 350 °C and a pressure from 7 to 100 bar.
